(19) Europäisches Patentamt
European Patent Office
Office européen des brevets

(11) EP 4 293 776 A1

(12) EUROPEAN PATENT APPLICATION

(43) Date of publication:
**20.12.2023 Bulletin 2023/51**

(21) Application number: **23179013.0**

(22) Date of filing: **13.06.2023**

(51) International Patent Classification (IPC):
***H01M 10/052*** *(2010.01)*

(52) Cooperative Patent Classification (CPC):
**H01M 10/052**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.06.2022 KR 20220072071**
**14.06.2022 KR 20220072070**

(71) Applicant: **Soulbrain Co., Ltd.**
**Seongnam-si, Gyeonggi-do 13486 (KR)**

(72) Inventors:
- **YUN, Jong Cheol**
  **13486 Bundang-gu, Seongnam-si (KR)**
- **KIM, Min Goo**
  **13486 Bundang-gu, Seongnam-si (KR)**
- **LEE, Sang Ho**
  **13486 Bundang-gu, Seongnam-si (KR)**
- **HAN, Ji Seong**
  **13486 Bundang-gu, Seongnam-si (KR)**
- **JANG, Min Jung**
  **13486 Bundang-gu, Seongnam-si (KR)**

(74) Representative: **Dehns**
**St. Bride's House**
**10 Salisbury Square**
**London EC4Y 8JD (GB)**

# (54) ELECTROLYTE SOLUTION AND SECONDARY BATTERY COMPRISING THE SAME

(57) The present invention relates to an electrolyte solution and a secondary battery including the same. According to the present invention, the present invention has an effect of providing a secondary battery having improved charging efficiency and output due to low discharge resistance and having a long lifespan and excellent high-temperature capacity retention rate by suppressing increase in thickness.

## Description

[Technical Field]

The present invention relates to an electrolyte solution and a secondary battery including the same. More particularly, the present invention relates to an electrolyte solution for batteries including an electrolyte solution additive capable of improving battery output characteristics and high-temperature storage characteristics and significantly reducing a thickness increase rate and a secondary battery including the electrolyte solution.

[Background Art]

In a lithium secondary battery, an electrolyte solution between a cathode and an anode enables smooth movement of lithium ions, and electricity is generated or used by oxidation-reduction reaction according to intercalation and desorption at the cathode and the anode.

A lithium secondary battery is mainly used as a power source for mobile IT devices, such as mobile phones, and electrically-driven tools. With the development of high-capacity technology, the use of lithium secondary batteries is expanding. For example, lithium secondary batteries are used in automobiles and energy storage.

As the application field of secondary batteries expands and the demand for secondary batteries increases, a secondary battery having better performance and stability than those required for conventional small batteries is required. In recent years, various studies on organic solvents or additives as components of electrolyte solutions are being conducted to improve battery characteristics such as output characteristics, cycle characteristics, storage characteristics, and film characteristics.

In the case of a conventional electrolyte solution that does not contain an electrolyte solution additive or contains an electrolyte solution additive with poor properties, it is difficult to expect improvement in low-temperature output characteristics due to the formation of a non-uniform SEI film. In addition, even when an electrolyte solution additive is included, when the input amount thereof is not properly adjusted, due to the electrolyte solution additive, the surface of a cathode is decomposed or an electrolyte solution is oxidized during high temperature reaction, ultimately degrading the cycle characteristics and storage stability of a secondary battery.

[Related Art Documents]

[Patent Documents]

KR 1295395 B1

[Disclosure]

[Technical Problem]

Therefore, the present invention has been made in view of the above problems, and it is one object of the present invention to provide an electrolyte solution for batteries including an electrolyte solution additive capable of improving battery output characteristics and high-temperature storage characteristics and significantly reducing a thickness increase rate.

It is another object of the present invention to provide an excellent secondary battery having improved battery output due to reduced discharge resistance, being capable of long-term storage due to improved recovery capacity at high temperatures, and being capable of suppressing gas generation in the battery.

The above and other objects can be accomplished by the present invention described below.

[Technical Solution]

In accordance with one aspect of the present invention, provided is an electrolyte solution, including:

an organic solvent, a lithium salt, a phosphorus-based cesium salt, and an additive,
wherein, based on 100 % by weight of the electrolyte solution, the additive includes two or more selected from compounds represented by Chemical Formulas 1 and 2 below in an amount of 0.01 to 20 % by weight:

[Chemical Formula 1]

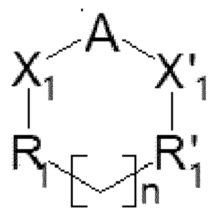

[Chemical Formula 2]

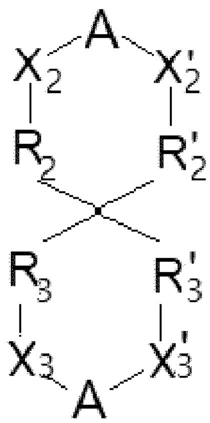

,

wherein, in Chemical Formulas 1 and 2, A is independently selected from C=O, O=P=O, O=S=O, O=N=O, P-F, P-Cl, P-Br, and P-I; $X_1$, $X_2$, $X_3$, $X_1$' , $X_2$', and $X_3$' are independently a bond or oxygen; n is an integer from 0 to 3; $R_1$ and $R_1$' are independently a single bond, a double bond, or a substituted or unsubstituted alkylene having 1 to 10 carbon atoms and include one or more carbon atoms; and $R_2$, $R_3$, $R_2$' , and $R_3$' are independently a substituted or unsubstituted alkylene having 1 to 10 carbon atoms and include one or more carbon atoms.

The additive may include a compound in which A is selected from O=P=O, O=S=O, and O=N=O and a compound in which A is C=O.

The additive may include a compound in which A is selected from P-F, P-Cl, P-Br, and P-I and a compound in which A is C=O.

The compound in which A is selected from O=P=O, O=S=O, and O=N=O may include one or more selected from compounds represented by Chemical Formulas 3 to 6 below:

[Chemical Formula 3]

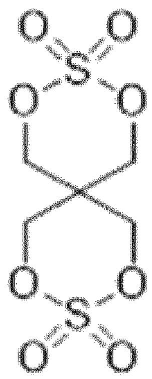

[Chemical Formula 4]

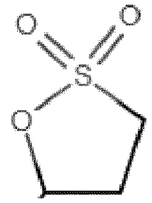

[Chemical Formula 5]

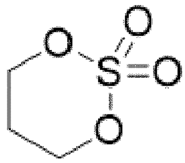

[Chemical Formula 6]

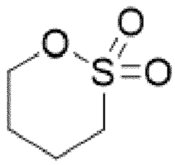

,

wherein, in Chemical Formulas 3 to 6, a solid line is a bond; carbon is located at a point where no separate element is shown and bonds meet; and the number of hydrogens satisfying a valence of the carbon is omitted.

The compound in which A is C=O may be selected from compounds represented by Chemical Formulas 7 to 9 below:

[Chemical Formula 7]

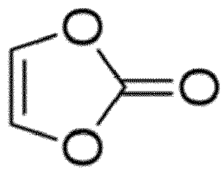

[Chemical Formula 8]

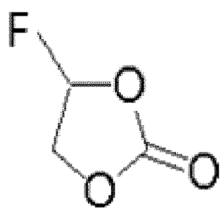

[Chemical Formula 9]

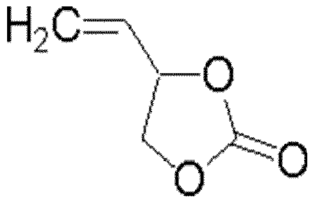

,

wherein, in Chemical Formulas 7 to 9, a solid line is a bond; carbon is located at a point where no separate element is shown and bonds meet; and the number of hydrogens satisfying a valence of the carbon is omitted.

The compound in which A is selected from P-F, P-Cl, P-Br, and P-I may be selected from compounds represented by Chemical Formulas 10 and 11 below:

[Chemical Formula 10]

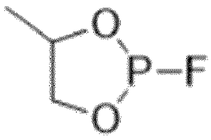

[Chemical Formula 11]

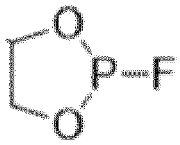

wherein, in Chemical Formulas 10 and 11, a solid line is a bond; carbon is located at a point where no separate element is shown and bonds meet; and the number of hydrogens satisfying a valence of the carbon is omitted.

The compound in which A is selected from O=P=O, O=S=O, and O=N=O and the compound in which A is C=O may be included in a weight ratio of 1:0.5 to 6.0.

The compound in which A is selected from P-F, P-Cl, P-Br, and P-I and the compound in which A is C=O may be included in a weight ratio of 1:0.5 to 6.0.

The phosphorus-based cesium salt may include a phosphate compound substituted with 1 to 6 halogen atoms.

The compound in which A is selected from O=P=O, O=S=O, and O=N=O, the compound in which A is C=O, and the phosphorus-based cesium salt may be included in a weight ratio of 1:0.5 to 6.0:0.1 to 3.

The compound in which A is selected from P-F, P-Cl, P-Br, and P-I, the compound in which A is C=O, and the phosphorus-based cesium salt may be included in a weight ratio of 1:0.5 to 6.0:0.1 to 3.

The lithium salt may include one or more selected from the group consisting of $LiPF_6$, $LiClO_4$, LiTFSI, $LiAsF_6$, $LiBF_4$, $LiBF_6$, $LiSbF_6$, $LiAlO_4$, $LiAlCl_4$, LiBOB, $LiB_{10}Cl_{10}$, $LiAlCl_4$, $LiAlO_4$, $LiClO_4$, $LiCF_3SO_3$, $LiCH_3CO_2$, $LiCF_3CO_2$, $LiAsF_6$, $LiSbF_6$, $LiCH_3SO_3$, LiBeTI, $LiC_4F_9SO_3$, LiN $(C_2F_5SO_3)_2$, LiN $(C_2F_5SO_2)_2$, LiN $(CF_3SO_2)_2$, LiN $(CaF_{2a+1}SO_2)(C_bF_{2b+1}SO_2)$ (a and b are natural numbers), LiCl, LiI, LiBr, and $LiB(C_2O_4)_2$.

The organic solvent may include two or more selected from the group consisting of ethylene carbonate (EC), propylene carbonate (PC), butylene carbonate (BC), vinylene carbonate (VC), dimethyl carbonate (DMC), diethyl carbonate (DEC), dipropyl carbonate (DPC), ethyl methyl carbonate (EMC), methyl ethyl carbonate (MEC), fluoroethylene carbonate (FEC), methyl propyl carbonate (MPC), ethyl propyl carbonate (EPC), 1,2-butylene carbonate, 2,3-butylene carbonate, 1,2-pentylene carbonate, 2,3-butylene carbonate, methyl acetate, ethyl acetate, propyl acetate, methyl propionate, ethyl propionate, propyl propionate, butyl propionate, γ-butyrolactone, γ-valerolactone, γ-caprolactone, σ-valerolactone, and ε-caprolactone.

Based on 100 % by weight in total of the electrolyte solution, the electrolyte solution may include one or more additives selected from the group consisting of boron compounds, phosphorus compounds, sulfur compounds, and nitrogenous compounds in an amount of 10 % by weight or less.

In accordance with another aspect of the present invention, provided is a lithium secondary battery including an anode, a cathode, a separator disposed between the anode and the cathode, and an electrolyte solution,
wherein the electrolyte solution is the above-described electrolyte solution.

The lithium secondary battery may have a discharge resistance value of 32.5 mΩ or less at 60 °C.
The lithium secondary battery may have a recovery capacity of 770 mAh or more at 60 °C.
The lithium secondary battery may have a thickness increase rate of 10.5 % or less as measured at 60 °C and calculated by Equation 1 below:

[Equation 1]

Thickness increase rate (%) = {(Thickness after storage at high temperature - Initial thickness) / Initial thickness} × 100

[Advantageous Effects]

When an electrolyte solution for batteries according to the present invention is included in a secondary battery, the secondary battery can have improved output due to reduced discharge resistance and have a long lifespan and excellent high-temperature capacity retention rate due to improved recovery capacity at high temperatures.
In particular, the additive for batteries according to the present invention can suppress gas generation and thickness increase in a battery, thereby providing a secondary battery having excellent performance and lifespan characteristics.

[Best Mode]

Hereinafter, an electrolyte solution additive, an electrolyte solution for batteries, and a secondary battery including the electrolyte solution according to the present invention will be described in detail.
The present inventors have studied to develop a secondary battery for automobiles having improved output and having excellent recovery capacity and lifespan characteristics at high temperatures. While conducting the above research, the present inventors confirmed that all of the above objects were achieved when an additive having a specific structure was added to an electrolyte solution of a secondary battery. Based on these results, the present inventors conducted further studies to complete the present invention.
The electrolyte solution additive of the present invention includes a phosphorus-based cesium salt and two or more selected from compounds represented by Chemical Formulas 1 and 2 below. In this case, battery output may be improved due to reduced charge resistance, long-term storage may be realized due to improved recovery capacity at high temperatures, and lifespan maintenance at high temperatures may be excellent.

[Chemical Formula 1]

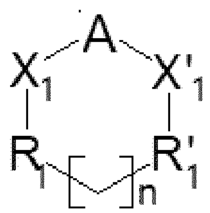

[Chemical Formula 2]

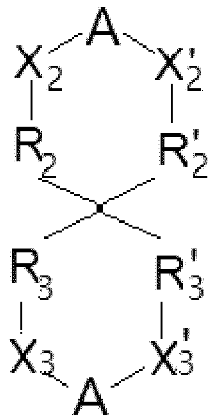

In Chemical Formulas 1 and 2, A is independently selected from C=O, O=P=O, O=S=O, O=N=O, P-F, P-Cl, P-Br, and P-I; $X_1$, $X_2$, $X_3$, $X_1$' , $X_2$' , and $X_3$' are independently a bond or oxygen; n is an integer from 0 to 3; $R_1$ and $R_1$' are independently a single bond, a double bond, or a substituted or unsubstituted alkylene having 1 to 10 carbon atoms and include one or more carbon atoms; and $R_2$, $R_3$, $R_2$', and $R_3$' are independently a substituted or unsubstituted alkylene having 1 to 10 carbon atoms and include one or more carbon atoms.

The additive includes both a compound in which A is selected from O=P=O, O=S=O, and O=N=O and a compound in which A is C=O, or includes both a compound in which A is selected from P-F, P-Cl, P-Br, and P-I and a compound in which A is C=O.

In addition, the phosphorus-based cesium salt includes a phosphate compound substituted with 1 to 6 halogen atoms.

In addition, the electrolyte solution for batteries of the present invention includes the electrolyte solution additive.

When the compounds represented by Chemical Formulas 1 and 2 are added to the electrolyte solution of a secondary battery, electrons are localized toward o element due to the electronegativity difference between S element or C element and O element directly bonded thereto or the electronegativity difference between P element or C element and O element or a halogen element such as F element directed boned thereto. Accordingly, S, P, or C element becomes electron-poor (e- poor, $\delta$+) state, and oxidation reaction is induced in the electrolyte solution containing lithium ions, thereby forming a stable film on an electrode. At this time, decomposition of the electrolyte solution may be prevented due to the stability of the film, and thus cycle characteristics may be improved. In particular, compared to conventional electrode films that decompose at high temperatures and have poor high-temperature storage properties, the film does not decompose at high temperatures and thus has excellent high-temperature storage properties. In addition, resistance increase may be prevented, and thus charging efficiency and output may be improved. In addition, the safety of a battery may be improved because gas generation due to chemical reaction inside the battery is suppressed. In addition, structural collapse of the electrode active materials of a cathode and anode may be prevented at high temperatures, thereby improving capacity retention. As a result, the effect of increasing a lifespan may be obtained.

Specifically, gas generation inside a battery is mainly due to decomposition of electrolyte solution components, especially carbonate-based solvents, on the surface of cathode/anode. A cathode/anode protective film may be easily degraded by the generated gas, and gas generation is further promoted due to oxygen radicals generated from the cathode. The material of the present invention may suppress direct decomposition of a solvent by forming a protective film composed of halogen components such as S, O, and F and having excellent stability. In addition, the material of the present invention may prevent elution of transition metal ions from the cathode due to cathode deterioration due to the metal ion coordination effect, thereby ultimately preventing escape of oxygen elements constituting the skeleton of the cathode.

When manufacturing a lithium secondary battery using the electrolyte solution including compounds represented by Chemical Formulas 1 and 2 and a phosphorus-based cesium salt as the additive, decomposition of the electrolyte solution may be suppressed, thereby reducing internal resistance increase rate, gas generation, and thickness increase rate and thus increasing the lifespan of the battery.

As a specific example, when the additive includes two or more selected from the group consisting of compounds represented by Chemical Formulas 1 and 2, since flow of electrons in a molecule is stabilized, the above configuration is preferable in terms of molecular structure stabilization, chemical stability, ion mobility of the electrolyte solution, and prevention of side reactions of an electrode active material. In addition, since the charge resistance of a secondary battery including the additive is reduced, the output of the battery may be improved, charging recovery capacity at high temperatures may be increased, and lifespan efficiency may be increased. Thus, the additive is preferably used as an

electrolyte solution additive for batteries.

The compounds represented by Chemical Formulas 1 and 2 are preferably symmetrical with respect to A. In this case, by forming a symmetrical linear structure, flow of electrons in a molecule is stabilized, thereby increasing molecular rigidity. As a result, battery performance may be greatly improved.

A of Chemical Formula 1 and A of Chemical Formula 2 may each independently be selected from O=P=O, O=S=O, O=N=O, and P-X (X is F, Cl, Br, or I), or may each independently be C=O. In terms of the above effects, it is more preferable that both sulfur (S) and C=O are included or both P-X and C=O are included.

In Chemical Formulas 1 and 2, $X_1$ and $X'_1$ may independently be oxygen (=O) or a saturated or unsaturated alkyl group having 1 to 3 carbon atoms (an alkyl group having a single bond or a double bond). When both $X_1$ and $X'_1$ are oxygen, the compounds represented by Chemical Formulas 1 and 2 are chemically stabilized and inactivated, and the molecular structures thereof are simplified and stabilized. Thus, the above case is preferable.

In Chemical Formulas 1 and 2, $R_1$, $R'_1$, $R_2$, $R'_2$, $R_3$, and $R'_3$ may each independently be an alkylene group having 1 to 3 carbon atoms or an alkyl group having 1 to 3 carbon atoms, preferably methylene, ethylene, methyl, or ethyl. In this case, the ion mobility of the electrolyte solution including the compounds represented by Chemical Formulas 1 and 2 and the organic solvent may be improved. In addition, the compounds form a hydrogen bond with an electrode active material on the surface of an electrode, which may prevent side reactions of the electrode active material that may occur during charging and discharging of a battery, and thus may greatly increase the battery stability and the charging and discharging efficiency.

Based on 100 % by weight in total of the electrolyte solution, the electrolyte solution of the present invention may include the compound represented by Chemical Formulas 1 and 2, wherein A is selected from O=P=O, O=S=O, O=N=O, P-F, P-Cl, P-Br, and P-I, in an amount of 0.1 to 20 % by weight, preferably 0.5 to 10 % by weight. Within this range, decomposition of the electrolyte solution may be suppressed, thereby improving the lifespan characteristics and cycle characteristics of the battery.

As a specific example, the compound represented by Chemical Formulas 1 and 2, wherein A is selected from O=P=O, O=S=O, and O=N=O, may include compounds represented by Chemical Formulas 3 to 6.

[Chemical Formula 3]

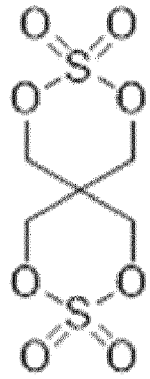

[Chemical Formula 4]

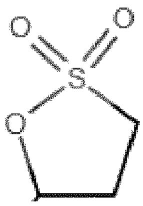

[Chemical Formula 5]

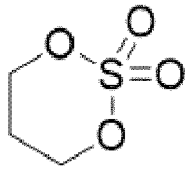

[Chemical Formula 6]

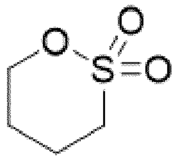

In Chemical Formulas 3 to 6, a solid line is a bond; carbon is located at a point where no separate element is shown and bonds meet; and the number of hydrogens satisfying the valence of the carbon is omitted.

In addition, as another example, the compounds represented by Chemical Formulas 1 and 2 may include compounds represented by Chemical Formulas 7 to 9 below, wherein A is C=O. In this case, the compound is adsorbed on the metal surface of an electrode and inhibits side reactions between the electrode and an electrolyte, thereby further improving the stability of the electrolyte solution and thus improving the cycle characteristics, stability, and lifespan of the battery.

[Chemical Formula 7]

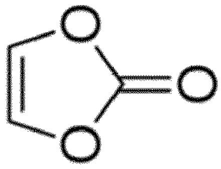

[Chemical Formula 8]

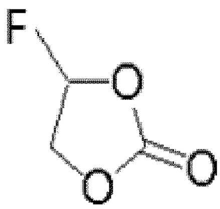

[Chemical Formula 9]

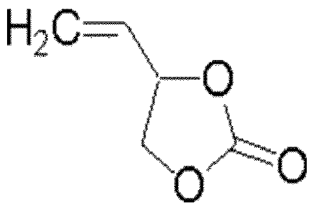

In Chemical Formulas 7 to 9, a solid line is a bond; carbon is located at a point where no separate element is shown and bonds meet; and the number of hydrogens satisfying the valence of the carbon is omitted.

In addition, as another example, the compounds represented by Chemical Formulas 1 and 2 may include compounds represented by Chemical Formulas 10 and 11 below, wherein A is selected from P-F, P-Cl, P-Br, and P-I. In this case, the compound is adsorbed on the metal surface of an electrode and inhibits side reactions between the

electrode and an electrolyte, thereby further improving the stability of the electrolyte solution and thus improving the cycle characteristics, stability, and lifespan of the battery.

[Chemical Formula 10]

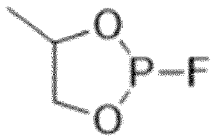

[Chemical Formula 11]

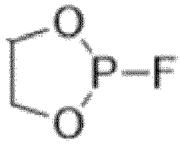

In Chemical Formulas 10 and 11, a solid line is a bond; carbon is located at a point where no separate element is shown and bonds meet; and the number of hydrogens satisfying the valence of the carbon is omitted.

Based on 100 % by weight in total of the electrolyte solution, the electrolyte solution of the present invention may include the compounds represented by Chemical Formulas 1 and 2, wherein A is selected from O=P=O, O=S=O, O=N=O, P-F, P-Cl, P-Br, and P-I, in an amount of 0.1 to 20 % by weight, preferably 0.5 to 10 % by weight. Within this range, decomposition of the electrolyte solution may be suppressed, thereby improving the lifespan characteristics and cycle characteristics of the battery.

In addition, when the phosphorus-based cesium salt is added to the electrolyte solution of a secondary battery, due to the electronegativity difference between P element and a halogen element directly bonded thereto, electrons are localized towards the halogen element.

When the electrolyte solution additive containing the phosphorus-based cesium salt is added to the electrolyte solution of a secondary battery, due to the electronegativity difference between P element and a halogen element such as F, Cl, and Br directly bonded thereto, electrons are localized toward the halogen element. As a result, the P element becomes electron-poor (e- poor, $\delta$+) state, and oxidation reaction is induced in the electrolyte solution containing lithium ions, thereby forming a stable film on an electrode, specifically, a cathode. At the same time, ion conductivity is improved due to a halogen substituent substituted at the terminal.

Here, as the number of halogens to be substituted increases, the effect increases. Accordingly, the case where the number of halogen atoms is 6 is more preferable. As the halogen atom, F, Cl, Br, and I may be used, but F may be mainly used in terms of reaction efficiency.

In this case, due to the stability of the film, decomposition of the electrolyte solution may be prevented, thereby improving cycle characteristics. In particular, compared to conventional electrode films that decompose at high temperatures and have poor high-temperature storage properties, the film does not decompose at high temperatures and thus has excellent high-temperature storage properties. In addition, resistance increase may be prevented, and thus charging efficiency and output may be improved. In addition, the safety of a battery may be improved because gas generation due to chemical reaction inside the battery is suppressed.

Specifically, gas generation inside a battery is mainly due to decomposition of electrolyte solution components, especially carbonate-based solvents, on the surface of cathode/anode. A cathode/anode protective film may be easily degraded by the generated gas, and gas generation is further promoted due to oxygen radicals generated from the cathode. The material of the present invention may suppress direct decomposition of a solvent by forming a protective film composed of halogen components such as S, O, and F and having excellent stability. In addition, the material of the present invention may prevent elution of transition metal ions from the cathode due to cathode deterioration due to the metal ion coordination effect, thereby ultimately preventing escape of oxygen elements constituting the skeleton of the cathode.

In addition, structural collapse of the electrode active materials of a cathode and anode may be prevented at high temperatures, thereby improving capacity retention. As a result, the effect of increasing a lifespan may be obtained.

Based on 100 % by weight in total of the electrolyte solution, the electrolyte solution of the present invention may include the phosphorus-based cesium salt in an amount of 0.1 to 20 % by weight, preferably 0.2 to 10 % by weight. Within this range, decomposition of the electrolyte solution may be suppressed, thereby improving the lifespan characteristics and cycle characteristics of the battery.

When the electrolyte solution of the present invention is prepared using two or more additives selected from the compounds represented by Chemical Formulas 1 and 2 and a phosphorus-based cesium salt in combination, the effect of suppressing side reactions of an electrolyte may be maximized. When a lithium secondary battery is manufactured using the electrolyte solution, the amount of gas generation may be reduced when left at high temperatures, thereby decreasing internal resistance increase rate and ultimately improving the lifespan characteristics of the battery.

When the compound in which A is selected from O=P=O, O=S=O, O=N=O, P-F, P-Cl, P-Br, and P-I and the compound in which A is C=O are included in a weight ratio of 1:0.5 to 6 or a weight ratio of 1:1 to 3, battery stability may be improved.

When the compound in which A is selected from O=P=O, O=S=O, O=N=O, P-F, P-Cl, P-Br, and P-I, the compound in which A is C=O, and the phosphorus-based cesium salt are included in a weight ratio of 1:0.5 to 6:0.1 to 3, a weight ratio of 1:0.5 to 6:0.1 to 2, or a weight ratio of 1:1 to 3:0.2 to 1.0, battery stability may be improved.

A non-aqueous solvent included in the electrolyte solution of the present invention is not particularly limited as long as the solvent minimizes decomposition due to oxidation reaction during the charging and discharging process of the battery and obtains the desired characteristics in combination with the additive. For example, the non-aqueous solvent may be a carbonate-based organic solvent, an acetate-based organic solvent, a propionate-based organic solvent, or an ester-based organic solvent. The solvent may be used alone, or the two or more solvents may be used in combination.

For example, 10 to 100 % by volume of the carbonate-based organic solvent and up to 90 % by volume of one or more selected from the group consisting of the acetate-based organic solvent, the propionate-based organic solvent, and the ester-based organic solvent may be mixed and used.

For example, among the non-aqueous solvents, the carbonate-based organic solvent may include one or more selected from the group consisting of ethylene carbonate (EC), propylene carbonate (PC), butylene carbonate (BC), vinylene carbonate (VC), dimethyl carbonate (DMC), diethyl carbonate (DEC), dipropyl carbonate (DPC), ethyl methyl carbonate (EMC), methyl ethyl carbonate (MEC), fluoroethylene carbonate (FEC), methyl propyl carbonate (MPC), and ethyl propyl carbonate (EPC).

More preferably, among the carbonate-based organic solvents, a high-permittivity carbonate-based organic solvent capable of improving battery charge/discharge performance and having high ionic conductivity and a low-viscosity carbonate-based organic solvent capable of properly adjusting the viscosity of the high-permittivity organic solvent may be mixed and used.

Specifically, a high-permittivity organic solvent selected from the group consisting of ethylene carbonate, propylene carbonate, and a mixture thereof and a low-viscosity organic solvent selected from the group consisting of ethyl methyl carbonate, dimethyl carbonate, diethyl carbonate, and a mixture thereof may be mixed and used.

Preferably, the high-permittivity organic solvent and the low-viscosity organic solvent may be mixed in a volume ratio of 2:8 to 8:2. More specifically, ethylene carbonate or propylene carbonate; ethyl methyl carbonate; and dimethyl carbonate or diethyl carbonate may be mixed in a volume ratio of 5:1:1 to 2:5:3, as a specific example, a volume ratio of 3:5:2.

As a specific example, the carbonate-based organic solvent may include ethylene carbonate (EC), diethyl carbonate (DEC), and ethyl methyl carbonate (EMC). In this case, 10 to 40 % by weight, 15 to 35 % by weight, 20 to 30 % by weight, or 22 to 28 % by weight of ethylene carbonate; 15 to 45 % by weight, 20 to 40 % by weight, 25 to 35 % by weight, or 27 to 33 % by weight of diethyl carbonate; and 30 to 60 % by weight, 35 to 55 % by weight, 40 to 50 % by weight, or 42 to 48 % by weight of ethyl methyl carbonate may be mixed and used.

For example, the acetate-based organic solvent may include methyl acetate, ethyl acetate, and propyl acetate, without being limited thereto.

For example, the propionate-based organic solvent may include propionate and methyl propionate, without being limited thereto.

The ester-based organic solvent may be γ-butyrolactone, γ-valerolactone, γ- caprolactone, σ-valerolactone, ε-caprolactone, or the like.

For example, the organic solvent may be used in the remaining amount after subtracting the content of components other than the organic solvent in the electrolyte solution. As a specific example, based on a total weight of the electrolyte solution, the organic solvent may be used in an amount of 10 % by weight or less.

When the organic solvent contains moisture, lithium ions in the electrolyte solution may be hydrolyzed. Accordingly, the amount of moisture in the organic solvent is preferably adjusted to 150 ppm or less, more preferably 100 ppm or less.

For example, lithium salts that may be included in the electrolyte solution of the present invention may include one or more selected from the group consisting of $LiPF_6$, $LiClO_4$, LiTFSI, $LiAsF_6$, $LiBF_4$, $LiBF_6$, $LiSbF_6$, $LiAlO_4$, $LiAlCl_4$, LiBOB, $LiB_{10}Cl_{10}$, $LiAlCl_4$, $LiAlO_4$, $LiClO_4$, $LiCF_3SO_3$, $LiCH_3CO_2$, $LiCF_3CO_2$, $LiAsF_6$, $LiSbF_6$, $LiCH_3SO_3$, LiBeTI, $LiC_4F_9SO_3$, $LiN\ (C_2F_5SO_3)\ _2$, $LiN(C_2F_5SO_2)_2$, $LiN(CF_3SO_2)_2$, $LiN(CaF_{2a+1}SO_2)(C_bF_{2b+1}SO_2)$ (a and b are natural numbers), LiCl, LiI, LiBr, and $LiB(C_2O_4)_2$, preferably $LiPF_6$. For example, a and b may be integers from 1 to 4.

When the lithium salt is dissolved in an electrolyte solution, the lithium salt functions as a source of lithium ions in a lithium secondary battery and may promote the movement of lithium ions between a cathode and an anode. Accordingly, the lithium salt is preferably included in the electrolyte solution at a concentration of about 0.6 to 2 M. When the concentration of the lithium salt is less than 0.6 M, the conductivity of the electrolyte solution may be reduced, resulting in poor electrolyte solution performance. When the concentration of the lithium salt exceeds 2 M, the viscosity of the electrolyte solution may increase, which reduces the mobility of lithium ions.

Considering the conductivity of the electrolyte and the mobility of lithium ions, the lithium salt may be included in the electrolyte solution at a concentration of 0.5 to 1.5 M(mol/L), preferably 0.7 to 1.3 M, more preferably 0.8 to 1.1 M. Within this range, the performance of the electrolyte solution may be excellent due to high conductivity of the electrolyte solution, and the mobility of lithium ions may be excellent due to low viscosity of the electrolyte solution.

For example, the electrolyte solution may have a lithium ion conductivity of 0.3 S/m or more or 0.3 to 10 S/m at 25 °C. Within this range, the cycle characteristics and lifespan characteristics of the lithium secondary battery may be further improved.

In addition to the components thereof, the electrolyte solution may further include electrolyte solution additives that are generally used in electrolyte solutions for the purpose of improving lifespan characteristics of a battery, suppressing a decrease in battery capacity, and improving the discharge capacity of a battery.

For example, the electrolyte solution additive may include one or more (hereinafter also referred to as "additional additive") selected from the group consisting of boron compounds, phosphorus compounds, sulfur compounds, nitrogenous compounds, and silicon-based compounds.

For example, the additional additive may include one or more selected from compounds represented by Chemical Formulas 12 to 16 below. In this case, decomposition of the electrolyte may be suppressed more effectively.

[Chemical Formula 12]

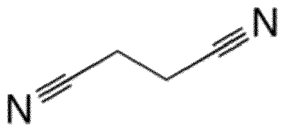

[Chemical Formula 13]

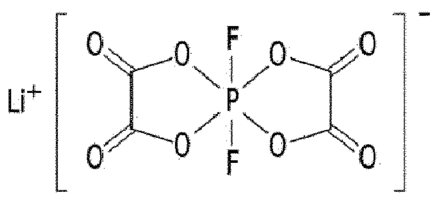

[Chemical Formula 14]

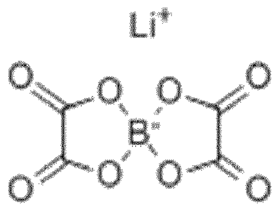

[Chemical Formula 15]

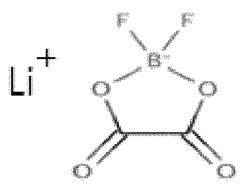

[Chemical Formula 16]

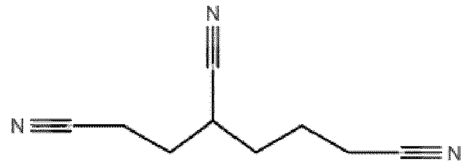

In Chemical Formulas 12 to 16, a solid line is a bond; carbon is located at a point where no separate element is shown and bonds meet; and the number of hydrogens satisfying the valence of the carbon is omitted.

Based on 100 % by weight in total of the electrolyte solution, the electrolyte solution of the present invention may include the additional additive in an amount of 10 % by weight or less, preferably 0.5 to 5 % by weight. Within this range, decomposition of the electrolyte solution may be suppressed, thereby improving the lifespan characteristics and cycle characteristics of the battery.

In addition, the electrolyte solution additive may include metal fluoride. When the electrolyte solution additive further includes the metal fluoride, the influence of acids generated around a cathode active material may be reduced, the reaction between the cathode active material and the electrolyte solution may be suppressed, and rapid decrease in the capacity of the battery may be suppressed.

Specifically, the metal fluoride may include one or more selected from the group consisting of LiF, RbF, TiF, AgF, $AgF_2$, $BaF_2$, $CaF_2$, $CdF_2$, $FeF_2$, $HgF_2$, $Hg_2F_2$, $MnF_2$, $NiF_2$, $PbF_2$, $SnF_2$, $SrF_2$, $XeF_2$, $ZnF_2$, $AlF_3$, $BF_3$, $BiF_3$, $CeF_3$, $CrF_3$, $DyF_3$, $EuF_3$, $GaF_3$, $GdF_3$, $FeF_3$, $HoF_3$, $InF_3$, $LaF_3$, $LuF_3$, $MnF_3$, $NdF_3$, $PrF_3$, $SbF_3$, $ScF_3$, $SmF_3$, $TbF_3$, $TiF_3$, $TmF_3$, $YF_3$, $YbF_3$, $TlF_3$, $CeF_4$, $GeF_4$, $HfF_4$, $SiF_4$, $SnF_4$, $TiF_4$, $VF_4$, $ZrF_4$, $NbF_5$, $SbF_5$, $TaF_5$, $BiF_5$, $MoF_6$, $ReF_6$, $SF_6$, $WF_6$, $CoF_2$, $CoF_3$, $CrF_2$, CsF, $ErF_3$, $PF_3$, $PbF_3$, $PbF_4$, $ThF_4$, $TaF_5$, and $SeF_6$.

For example, based on a total weight of the electrolyte solution, the metal fluoride may be included in an amount of 0.1 to 10 % by weight or 0.2 to 5 % by weight. Within this range, the cycle characteristics and lifespan characteristics of the lithium secondary battery may be further improved.

In the electrolyte solution according to the present invention having the above composition, decomposition reaction of the electrolyte solution is inhibited in a wide temperature range from -20 °C to 60 °C, reducing gas generation and internal resistance increase rate. Thus, a secondary battery including the electrolyte solution having high stability and reliability may be provided. In addition, since the structure of the battery is the same as that of a general secondary battery, the battery may be easily manufactured and is advantageous for mass production.

The lithium secondary battery according to the present invention may include a cathode; an anode; a separator disposed between the cathode and the anode; and an electrolyte solution. The electrolyte solution may include the above-described electrolyte solution, and the cathode and the anode may include a cathode active material and an anode active material, respectively.

For example, the cathode may be prepared by obtaining a composition for forming a cathode active material layer by mixing a cathode active material, a binder, and optionally a conductive agent, and then applying the composition to a cathode current collector such as aluminum foil.

For example, as the cathode active material, common lithium composite metal oxides and lithium olivine-type phosphates used in lithium secondary batteries may be used. Preferably, the cathode active material may include one or more selected from the group consisting of cobalt, manganese, nickel, and iron, more preferably a lithium nickel cobalt manganese oxide (NCM) .

As a specific example, the cathode active material may be a lithium composite metal oxide represented by a chemical formula of $Li [Ni_xCo_{1-x-y}Mn_y] O_2$ (0<x<0. 5, 0<y<0.5), but the present invention is not limited thereto. For example, in the Chemical Formula of $Li [Ni_xCo_{1-x-y}Mn_y] O_2$ representing the lithium composite metal oxide, the variables x and y may be 0.0001<x<0.5, 0.0001<y<0.5, or 0.001<x<0.3, 0.001<y<0.3.

As another example, a compound (lithiated intercalation compound) capable of reversible intercalation and deintercalation of lithium may be used as the cathode active material. To improve the capacity characteristics and stability of a battery, among the compounds, one or more selected from the group consisting of $LiCoO_2$, $LiMnO_2$, $LiMn_2O_4$, $LiNiO_2$, $LiNi_xMn_{(1-x)}O_2$ (0<x<1), and $LiMl_xM2_yO_2$ ( 0≤x≤1, 0≤y≤1, 0≤x+y≤1, and M1 and M2 are each independently any one selected from the group consisting of Al, Sr, Mg, and La) are preferably used.

In addition, for example, among the cathode active materials, the lithium olivine-type phosphate may include one or more selected from iron, cobalt, nickel, and manganese, specifically, $LiFePO_4$, $LiCoPO_4$, and $LiMnPO_4$. In addition, compounds in which some metals in the lithium olivine-type phosphate are replaced with other metals may also be used.

For example, the anode may be prepared by obtaining a composition for forming an anode active material layer by mixing an anode active material, a binder, and optionally a conductive agent, and then applying the composition to an anode current collector such as copper foil.

For example, as the anode active material, a compound capable of reversible intercalation and deintercalation of lithium may be used.

For example, the anode active material may include one or more selected from the group consisting of tin, tin compounds, silicon, silicon compounds, lithium titanate, crystalline carbon, amorphous carbon, synthetic graphite, and natural graphite.

In the present disclosure, the tin compound is a compound obtained by combining tin with one or more other chemical elements, and the silicon compound is a compound obtained by combining silicon with one or more other chemical elements.

In addition to the carbonaceous materials such as crystalline carbon, amorphous carbon, and graphite, a metallic compound capable of alloying with lithium or a composite including a metallic compound and a carbonaceous material may also be used as the anode active material. For example, graphite may be used as the anode active material.

For example, as the metal capable of alloying with lithium, any one of Si, Al, Sn, Pb, Zn, Bi, In, Mg, Ga, Cd, Si alloy, Sn alloy, and Al alloy may be used. In addition, a metallic lithium thin film may be used as the anode active material.

As the anode active material, at least one selected from the group consisting of crystalline carbon, amorphous carbon, carbon composites, lithium metal, and lithium-containing alloys, known to have high stability, may be used.

For example, a battery assembly may be manufactured by placing a separator between the aforementioned cathode and anode, inserting the separator/cathode/anode assembly into a cell, injecting the electrolyte solution thereto, and sealing the cell. For example, the lithium secondary battery including the above-described electrolyte solution, cathode, anode and separator may be formed in a unit cell having a structure of cathode/separator/anode, a bi-cell having a structure of cathode/separator/anode/separator/cathode, or a structure of a laminated cell in which the structure of a unit cell is repeated.

In the secondary battery according to one embodiment of the present invention, by adding the additive and the phosphorus-based cesium salt to improve battery performance, battery characteristics such as battery discharge resistance, output characteristics, capacity recovery characteristics at high temperatures of 60 °C or higher, and lifespan characteristics measured by HPPC (Hybrid Pulse Power Characterization) may be improved.

In the secondary battery according to another embodiment of the present invention, by adding a performance improver in addition to the above-mentioned additive added to the electrolyte solution, battery characteristics such as battery discharge resistance, output characteristics, capacity recovery characteristics at high temperatures of 60 °C or higher, and lifespan characteristics measured by HPPC (Hybrid Pulse Power Characterization) may be further improved.

Specifically, the secondary battery of the present invention may have an HPPC discharge resistance value of 32.5 mS2 or less, as a specific example, 32 mS2 or less, 20 to 32 mS2, or 28 to 32 mS2 as measured at 60 °C.

In the present disclosure, the HPPC discharge resistance value may be measured by the method prescribed in the literature "Battery test manual for plug-in hybrid electric vehicles (2010, Idaho National Laboratory for the U.S. Department of Energy)", and is an important index representing the output characteristics of a battery. In addition, the discharge resistance is a resistance value measured during discharging of a battery. Within the range, improved output performance may be provided. As the discharge resistance decreases, energy loss is reduced, thereby increasing a charging speed and thus improving the output of a battery. The HPPC discharge resistance value of the secondary battery of the present invention is reduced up to 23.6 %. Due to these advantages, the secondary battery of the present invention has high charging speed and output, and thus is suitable for use as an automobile battery.

The secondary battery of the present invention may have a recovery capacity of 770 mAh or more, as a specific example, 776.3 mAh or more, 777 to 800 mAh, 790 mAh or more, or 785 to 800 mAh as measured at 60 °C.

In the present disclosure, the recovery capacity represents the capacity retention characteristics of a battery that has been left unattended for a long period of time. The recovery capacity may be obtained by measuring and comparing discharged electric capacity when a battery left for a long time is discharged to a discharge final voltage and discharged electric capacity when the discharged battery is recharged and discharged again to the discharge final voltage. As the recovery capacity increases, the amount of spontaneous discharge due to battery preservation (storage) decreases, which means that a battery may be preserved for a long time. In particular, as the storage temperature of a battery increases, spontaneous discharge rate increases. Thus, recovery capacity at high temperatures is a very important characteristic of automotive batteries. When the electrolyte solution additive of the present invention is added to an electrolyte solution for batteries, the recovery capacity is increased as described above, and thus long-term storage is possible with only one charge.

In addition, the secondary battery may have a thickness of 4 mm or less, as a specific example, 3.16 mm or less, 1 to 3.2 mm, 2 to 3.16 nm, 2 to 3.2 mm, or 3 to 3.16 mm as measured at 60 °C.

In addition, the secondary battery may have a thickness increase rate of 10.5 % or less, as a specific example, 10 % or less, 5 to 10 %, 5 to 9.5 %, or 6 to 9 % as measured at 60 °C and calculated by Equation 1 below.

[Equation 1]

$$\text{Thickness increase rate (\%)} = \{(\text{Thickness after storage at high temperature} - \text{Initial thickness}) / \text{Initial thickness}\} \times 100$$

In the present disclosure, the thickness increase rate represents the swelling characteristics due to gas generation inside a battery, and may be obtained by measuring the initial thickness of a pouch cell and the thickness after leaving at high temperature and comparing the difference between the two values. When a stable film is formed on the cathode and anode, decomposition of electrolyte components may be suppressed. Accordingly, when the thickness increase rate is reduced, stability according to repeated charging and discharging of a battery may be provided, and battery lifespan may be improved.

In addition, the secondary battery may have a lifespan (coulomb) efficiency of 93 % or more, as a specific example, 93 to 99 %, 94 to 99 %, 94.2 % or more, 94.2 to 99 %, or 94.5 to 98 % as calculated by Equation 2 below.

[Equation 2]

$$\text{High-temperature lifespan efficiency (\%)} = (\text{Discharge capacity at 300 cycles} / \text{Discharge capacity at 1 cycle}) \times 100$$

In the present disclosure, the lifespan (coulomb) efficiency is calculated based on charge capacity and discharge capacity at 300 cycles. The lifespan (coulomb) efficiency is associated with an effect of improving charging and discharging efficiency.

Therefore, when the battery of the present invention is used as a battery for automobiles, output dependent on the size of an automobile may be improved. In addition, performance at low and high temperatures associated with climate change and direct exposure to sunlight while driving or parked may be improved, and thus lifespan may be increased. Thus, the battery of the present invention may exhibit excellent performance as an automobile battery.

The lithium secondary battery according to the present invention may be classified into a lithium ion battery, a lithium ion polymer battery, and a lithium polymer battery according to the types of separator and electrolyte solution used. In addition, the lithium secondary battery of the present invention may be classified into cylindrical, prismatic, coin, and pouch types according to the shape thereof. In addition, the lithium secondary battery of the present invention may be classified into a bulk type and a thin-film type according to the size thereof. Thereamong, the electrolyte solution according to an embodiment of the present invention may be suitably applied to a lithium ion battery, an aluminum laminated battery, and a lithium polymer battery.

The lifespan characteristics of the lithium secondary battery including the electrolyte solution according to the present invention may be improved at a high temperature of 45 °C or higher, as a specific example, 45 °C to 70 °C, and the internal resistivity thereof may be increased. In addition, in the lithium secondary battery, thickness increase rate and gas generation may be reduced. Thus, when the battery of the present invention is used as an automobile battery, output associated with the size of an automobile and performance at low and high temperatures associated with climate change and direct exposure to sunlight while driving or parked may be improved. Thus, the battery of the present invention may exhibit excellent performance as an automobile battery.

That is, when the electrolyte solution additive according to embodiments of the present invention and the electrolyte solution including the same are used to manufacture a secondary battery, the charge resistance, output, recovery capacity, and lifespan efficiency of the secondary battery may be improved, and thus the secondary battery is suitable for use as a secondary battery for automobiles. In addition, the secondary battery may be useful for portable devices such as mobile phones, notebook computers, digital cameras, and camcorders, electric vehicles such as hybrid electric vehicles (HEVs) and plug-in HEVs (PHEVs), and medium- and large-sized energy storage systems.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

**[Examples: Preparation of electrolyte solution for batteries]**

**Examples 1 and 2 and Comparative Examples 1 to 4**

An organic solvent was prepared by dissolving, at a concentration of 1.15 M, $LiPF_6$ as a lithium salt in a carbonate-based mixed solvent containing EC, EMC, and DEC in a volume ratio of 2:4:4 (EC:EMC:DEC), and an electrolyte solution additive was prepared by mixing a compound represented by Chemical Formula 7 below, a compound represented by Chemical Formula 4 below, a compound represented by Chemical Formula 3 below, and a compound represented by Chemical Formula 15 below as a phosphorus-based cesium salt according to the contents shown in Table 1 below. Then, an electrolyte solution for batteries was prepared using the organic solvent and the electrolyte solution additive.

[Chemical Formula 7]

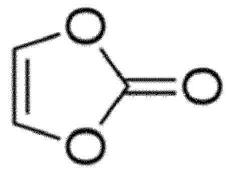

[Chemical Formula 4]

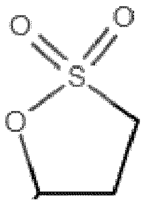

[Chemical Formula 3]

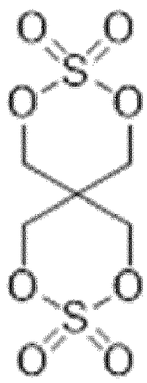

[Chemical Formula 15]

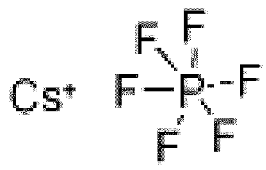

[Table 1]

| Classification | Chemical Formula 7 Content (wt%) | Chemical Formula 4 Content (wt%) | Chemical Formula 3 Content (wt%) | Chemical Formula 15 Content (wt%) |
|---|---|---|---|---|
| Example 1 | 1.5 | 0.5 | - | 0.25 |
| Example 2 | 1.5 | - | 0.5 | 0.25 |
| Comparative Example 1 | 1.5 | - | | 0.25 |
| Comparative Example 2 | 1.5 | 0.5 | - | - |
| Comparative Example 3 | 1.5 | - | 0.5 | - |
| Comparative Example 4 | - | 0.5 | - | 0.25 |

**Manufacture of battery**

100 parts by weight of a cathode mixture containing 92 % by weight of $Li(Ni_{0.8}Co_{0.1}Mn_{0.1})O_2$ as a cathode active material, 4 % by weight of carbon black as a conductive agent, and 4 % by weight of polyvinylidene fluoride (PVdF) as a binder was added to 100 parts by weight of N-methyl-2-pyrrolidone (NMP) as a solvent to prepare cathode mixture slurry. The cathode mixture slurry was applied to an aluminum (Al) thin film having a thickness of about 20 um as a cathode current collector. Then, the thin film was dried, and then was subjected to roll press to manufacture a cathode.

In addition, 100 parts by weight of an anode mixture containing 96 % by weight of carbon powder blended with artificial graphite and natural graphite as an anode active material, 3 % by weight of PVdF as a binder, and 1 % by weight of carbon black as a conductive agent was added to 100 parts by weight of NMP as a solvent to prepare anode mixture slurry. The anode mixture slurry was applied to a copper (Cu) thin film having a thickness of 10 $\mu$m as an anode current collector. Then, the thin film was dried, and then subjected to roll press to manufacture an anode.

A pouch-type battery was manufactured according to a conventional method using the manufactured cathode and anode and a separator composed of three layers of polypropylene/polyethylene/polypropylene (PP/PE/PP). Then, the electrolyte solutions prepared in Examples 1 to 2 and Comparative Examples 1 to 4 were injected into the pouch-type battery to manufacture lithium secondary batteries.

**Test Examples**

The performance of the manufactured secondary batteries was evaluated according to the following methods, and the results are shown in Table 2 below.

[Evaluation of HPPC discharge resistance]

HPPC discharge resistance was measured according to the method prescribed in the literature "Battery test manual for plug-in hybrid electric vehicles (2010, Idaho National Laboratory for the U.S. Department of Energy)".

After standing for 5 hours at 60 °C, a measurement voltage value, a charge/discharge current value corresponding to C-rate, current change ($\Delta$I), discharge voltage change ($\Delta$V), charge voltage change ($\Delta$V), discharge resistance, and charge resistance were measured. A resistance value was calculated using a slope value obtained from

change in current and voltage by briefly flowing charge/discharge current for each C-rate for a certain period of time, and the results are shown in the initial discharge resistance item in Table 2 below.

[Evaluation of high-temperature recovery capacity]

According to the charging conditions, charging was performed at a constant current of 1.0 C and a voltage of 4.2 V until charging current became 1/10 C. According to the discharging conditions, after performing charging and discharging by discharging to 3.0 V at a constant current of 1.0 C, (initial) recovery capacity was measured.

After charging was performed under the same charging and discharging conditions, the battery was stored in a thermostat at 60 °C for 4 weeks, and then discharged to a discharge voltage of 3 V at a room temperature of 25 °C. Then, the remaining capacity was measured. Then, recovery capacity was measured after 100 cycles under the same charging and discharging conditions, and the average value thereof was calculated. The results are shown in the item of recovery capacity after high temperature storage in Table 2 below.

[Anode swelling evaluation]

Using a compression-type thickness gauge (Mitutoyo Co.), the pouch cell-type secondary battery was placed between compression plates, and the thickness thereof was measured while the pouch cell was compressed with a weight of 300 g. To exclude the cooling effect, a thickness value (expansion thickness) measured immediately after removal from an oven at 60 °C and a thickness value measured according to the same method after storage for 4 weeks in a constant temperature bath at 60 °C were substituted into Equation 1 below to calculate thickness increase rate (%).

[Equation 1]

$$\text{Thickness increase rate (\%)} = \{(\text{Thickness after storage at high temperature} - \text{Initial thickness}) / \text{Initial thickness}\} \times 100$$

[Evaluation of Coulombic efficiency]

The secondary battery was charged with constant current at 45 °C at a current of 1 C rate until voltage reached 4.20 V (vs. Li), and then cut off at a current of 0.05 C rate while maintaining 4.20 V in a constant voltage mode. Subsequently, discharge was performed at a constant current of 1 C rate until voltage reached 3.0 V (vs. Li) during discharge.

The above cycle was repeated 300 times, and the charge capacity and the discharge capacity were substituted into Equation 2 to calculate the Coulombic efficiency.

[Equation 2]

$$\text{Coulombic efficiency (\%)} = (\text{Discharge capacity at 300 cycles} / \text{Charge capacity at 300cycles}) \times 100$$

[Table 2]

| Classification | Initial resistance (mΩ) | Recovery capacity after storage at high temperature (mAh) | Initial thickness (mm) | Expansion thickness (mm) | Thickness increase rate (%) | High-temperature lifespan efficiency (%) |
|---|---|---|---|---|---|---|
| Example1 | 31.9 | 790.7 | 2.87 | 3.09 | 7.7 | 95.34 |

(continued)

| Classification | Initial resistance (mΩ) | Recovery capacity after storage at high temperature (mAh) | Initial thickness (mm) | Expansion thickness (mm) | Thickness increase rate (%) | High-temperature lifespan efficiency (%) |
|---|---|---|---|---|---|---|
| Example2 | 31.2 | 795.3 | 2.88 | 3.13 | 8.7 | 94.87 |
| Comparative Example1 | 34.4 | 736.5 | 2.90 | 3.35 | 15.5 | 90.16 |
| Comparative Example 2 | 33.6 | 764.5 | 2.86 | 3.20 | 11.9 | 92.1 |
| Comparative Example 3 | 32.8 | 733.1 | 2.88 | 3.36 | 16.7 | 93.5 |
| Comparative Example 4 | 33.1 | 721.3 | 2.92 | 3.38 | 15.8 | 88.1 |

As shown in Table 2, in the case of the secondary batteries of Examples 1 and 2 using the electrolyte solution additive of the present invention, the charge resistance values thereof were 31.2 to 31.9 mQ. Comparative Examples 1 to 4 using one type of additive alone exhibited high charge resistance values 32.8 to 33.6 mQ. Based on these results, it was confirmed that the charge resistance value was reduced by up to 7 % by using the electrolyte solution additive of the present invention. In addition, these results indicate that the output of a battery may be improved by the electrolyte solution additive of the present invention.

In addition, as shown in Table 1, in the case of the secondary batteries of Examples 1 and 2 using the electrolyte solution additive of the present invention, the high-temperature recovery capacity thereof was 790.7 to 795.3 mAh. In contrast, Comparative Examples 1 to 4 using one type of additive alone exhibited a high-temperature recovery capacity of 721.3 to 736.5 mAh, which are values up to 69 mAh lower than Examples 1 and 2 of the present invention. These results indicate that the recovery capacity at a high temperature of 60 °C is increased by the electrolyte solution additive of the present invention. Accordingly, it is confirmed that, when the battery is stored for a long time in a high temperature environment, the recovery capacity efficiency of the battery may be improved by the electrolyte solution additive of the present invention.

In addition, as a result of checking anode expansion, in the case of the secondary batteries of Examples 1 and 2 using the electrolyte solution additive of the present invention, the thickness increase rates thereof were 7.7 to 8.7 %. In contrast, Comparative Examples 1 to 4 using one type of additive alone exhibited 11.9 to 16.7 %, which are values up to 9 % points higher than Examples 1 and 2 of the present invention. These results indicate that, compared to a conventional electrolyte solution additive, use of the electrolyte solution additive of the present invention may improve the capacity retention of the battery while repeating 300 cycles at a high temperature of 60 °C. Accordingly, it can be confirmed that use of the electrolyte solution additive of the present invention may improve high-temperature storage properties and lifespan properties.

In addition, as a result of evaluating lifespan (coulomb) efficiency, in the case of the secondary batteries of Examples 1 and 2 using the electrolyte solution additive of the present invention, the lifespan (coulomb) efficiency thereof was 94.87 to 95.34 %. In contrast, Comparative Examples 1 to 4 exhibited 88.1 to 93.5 %, which are values up to 6.77 % points lower than Examples 1 and 2 of the present invention. These results indicate that use of the electrolyte solution additive of the present invention improved the capacity retention rate of a battery while repeating 300 cycles at a high temperature of 60 °C compared to the case of using the conventional electrolyte solution additive. In addition, it can be seen that the cycle characteristics and lifespan efficiency of a battery are improved in a high-temperature environment by using the electrolyte solution additive of the present invention.

## Examples 3 and 4 and Comparative Examples 5 to 7

An organic solvent was prepared by dissolving, at a concentration of 1.15 M, $LiPF_6$ as a lithium salt in a carbonate-based mixed solvent containing EC, EMC, and DEC in a volume ratio of 2:4:4 (EC:EMC:DEC), and an electrolyte solution additive was prepared by mixing a compound represented by Chemical Formula 7 below, a compound represented by Chemical Formula 10 below, a compound represented by Chemical Formula 11 below, and a compound represented by Chemical Formula 15 below as a phosphorus-based cesium salt according to the contents shown in Table 3 below. Then, an electrolyte solution for batteries was prepared using the organic solvent and the electrolyte

solution additive.

[Chemical Formula 7]

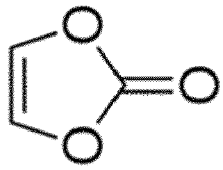

[Chemical Formula 10]

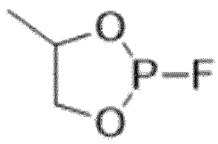

[Chemical Formula 11]

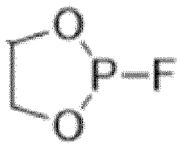

[Chemical Formula 15]

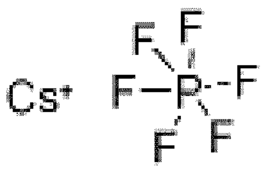

[Table 3]

| Classification | Chemical Formula 7 Content (wt%) | Chemical Formula 10 Content (wt%) | Chemical Formula 11 Content (wt%) | Chemical Formula 15 Content (wt%) |
|---|---|---|---|---|
| Example 3 | 1.5 | 0.5 | - | 0.5 |
| Example 4 | 1.5 | - | 0.5 | 0.5 |
| Comparative Example 5 | 1.5 | - | - | 0.5 |
| Comparative Example 6 | 1.5 | 0.5 | - | - |
| Comparative Example 7 | - | 0.5 | - | 0.5 |

## Manufacture of battery

100 parts by weight of a cathode mixture containing 92 % by weight of $Li(Ni_{0.8}Co_{0.1}Mn_{0.1})O_2$ as a cathode active material, 4 % by weight of carbon black as a conductive agent, and 4 % by weight of polyvinylidene fluoride (PVdF) as a binder was added to 100 parts by weight of N-methyl-2-pyrrolidone (NMP) as a solvent to prepare cathode mixture slurry. The cathode mixture slurry was applied to an aluminum (Al) thin film having a thickness of about 20 um as a cathode current collector. Then, the thin film was dried, and then was subjected to roll press to manufacture a cathode.
In addition, 100 parts by weight of an anode mixture containing 96 % by weight of carbon powder blended with artificial graphite and natural graphite as an anode active material, 3 % by weight of PVdF as a binder, and 1 % by weight of carbon black as a conductive agent was added to 100 parts by weight of NMP as a solvent to prepare anode mixture slurry. The anode mixture slurry was applied to a copper (Cu) thin film having a thickness of 10 μm as an anode current collector. Then, the thin film was dried, and then subjected to roll press to manufacture an anode.
A pouch-type battery was manufactured according to a conventional method using the manufactured cathode and anode and a separator composed of three layers of polypropylene/polyethylene/polypropylene (PP/PE/PP). Then, the electrolyte solutions prepared in Examples 3 and 4 and Comparative Examples 5 to 7 were injected into the pouch-type battery to manufacture lithium secondary batteries.

## Test Examples

The performance of the manufactured secondary batteries was evaluated according to the following methods, and the results are shown in Table 4 below.

[Table 4]

| Classi ficati on | Initia l resist ance (mΩ) | Recovery capacity after storage at high temperat ure (mAh) | Initial thickne ss (mm) | Expans ion thickn ess (mm) | Thickne ss increas e rate (%) | High-temperat ure lifespan efficien cy (%) |
|---|---|---|---|---|---|---|
| Exampl e 3 | 32.0 | 797.9 | 2.92 | 3.16 | 8.2 | 95.23 |
| Exampl e 4 | 32.1 | 788.4 | 2.89 | 3.18 | 10.0 | 95.11 |
| Compar ative Exampl e 5 | 34.2 | 733.4 | 2.92 | 3.39 | 16.1 | 91.02 |
| Compar ative Exampl e 6 | 34.5 | 743.0 | 2.86 | 3.37 | 17.8 | 90.34 |
| Compar ative Exampl | 33.5 | 764.1 | 2.91 | 3.56 | 22.3 | 89.18 |
| e 7 | | | | | | |

As shown in Table 4, in the case of the secondary batteries of Examples 3 and 4 using the electrolyte solution additive of the present invention, the charge resistance values thereof were 32.0 to 32.1 mQ. In contrast, Comparative Examples 5 to 7 using one type of additive alone exhibited high charge resistance values 33.5 to 34.5 mQ. Based on these results, it was confirmed that the charge resistance value was reduced by about 8 % by using the electrolyte solution additive of the present invention. These results indicate that the output of a battery may be improved by the electrolyte solution additive of the present invention.
In addition, as shown in Table 4, in the case of the secondary batteries of Examples 3 and 4 using the electrolyte solution additive of the present invention, the high-temperature recovery capacity thereof was 788.4 to 797.9 mAh. In contrast, Comparative Examples 5 to 7 using one type of additive alone exhibited 733.4 to 764.1 mAh, which are values up to 64 mAh lower than Examples 3 and 4 of the present invention. These results indicate that the recovery capacity at a high temperature of 60 °C is increased by the electrolyte solution additive of the present invention. Accordingly, it is confirmed that, when the battery is stored for a long time in a high temperature environment, the recovery capacity efficiency of the battery may be improved by the electrolyte solution additive of the present invention.
In addition, as a result of checking anode expansion, in the case of the secondary batteries of Examples 3 and

4 using the electrolyte solution additive of the present invention, the thickness increase rates thereof were 8.2 to 10.0 %. In contrast, Comparative Examples 5 to 7 using one type of additive alone exhibited 16.1 to 22.3 %, which are up to 14.1 % points higher than Examples 3 and 4 of the present invention. These results indicate that, compared to a conventional electrolyte solution additive, use of the electrolyte solution additive of the present invention may improve the capacity retention of the battery while repeating 300 cycles at a high temperature of 60 °C. Accordingly, it can be confirmed that use of the electrolyte solution additive of the present invention may improve high-temperature storage properties and lifespan properties.

In addition, as a result of evaluating lifespan (coulomb) efficiency, in the case of the secondary batteries of Examples 3 and 4 using the electrolyte solution additive of the present invention, the lifespan (coulomb) efficiency thereof was 95.11 to 95.23 %. In contrast, Comparative Examples 5 to 7 exhibited 89.18 to 91.02 %, which are values up to 6.05 % points lower than Examples 3 and 4 of the present invention. These results indicate that, compared to a conventional electrolyte solution additive, use of the electrolyte solution additive of the present invention may improve the capacity retention of the battery while repeating 300 cycles at a high temperature of 60 °C. Accordingly, it can be confirmed that the cycle characteristics and lifespan efficiency of the battery at a high temperature environment may be improved by using the electrolyte solution additive of the present invention.

Therefore, when the electrolyte solution additive of the present invention and the electrolyte solution including the same are applied to a secondary battery, the charge resistance, output, recovery capacity, and lifespan efficiency of the secondary battery may be improved. Due to these characteristics, the secondary battery according to the present invention is suitable for use as a secondary battery for energy storage systems (ESSs) and automobiles.

## Claims

1. An electrolyte solution, comprising an organic solvent, a lithium salt, a phosphorus-based cesium salt, and an additive, wherein, based on 100 % by weight of the electrolyte solution, the additive comprises two or more selected from compounds represented by Chemical Formulas 1 and 2 below in an amount of 0.01 to 20 % by weight:

[Chemical Formula 1]

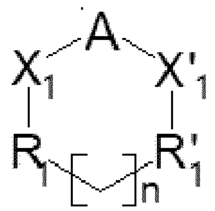

[Chemical Formula 2]

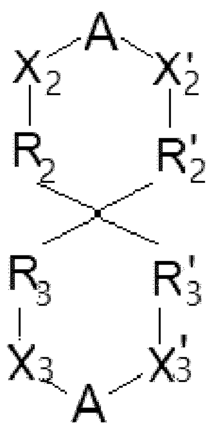

,

wherein, in Chemical Formulas 1 and 2, A is independently selected from C=O, O=P=O, O=S=O, O=N=O, P-F, P-Cl, P-Br, and P-I; $X_1$, $X_2$, $X_3$, $X_1'$, $X_2'$, and $X_3'$ are independently a bond or oxygen; n is an integer from 0 to 3; $R_1$ and $R_1'$ are independently a single bond, a double bond, or a substituted or unsubstituted alkylene having 1 to 10

carbon atoms and comprise one or more carbon atoms; and $R_2$, $R_3$, $R_2'$, and $R_3'$ are independently a substituted or unsubstituted alkylene having 1 to 10 carbon atoms and comprise one or more carbon atoms.

2. The electrolyte solution according to claim 1, wherein the additive comprises a compound in which A is selected from O=P=O, O=S=O, and O=N=O and a compound in which A is C=O, or comprises a compound in which A is selected from P-F, P-Cl, P-Br, and P-I and a compound in which A is C=O.

3. The electrolyte solution according to claim 2, wherein the compound in which A is selected from O=P=O, O=S=O, and O=N=O comprises one or more selected from compounds represented by Chemical Formulas 3 to 6 below:

[Chemical Formula 3]

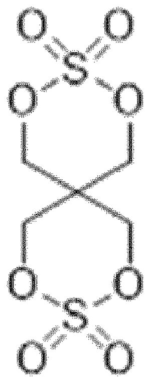

[Chemical Formula 4]

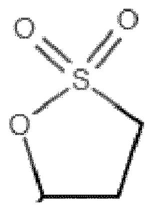

[Chemical Formula 5]

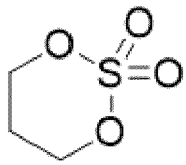

[Chemical Formula 6]

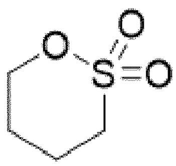

,

wherein, in Chemical Formulas 3 to 6, a solid line is a bond; carbon is located at a point where no separate element is shown and bonds meet; and the number of hydrogens satisfying a valence of the carbon is omitted.

4. The electrolyte solution according to claim 2, wherein the compound in which A is C=O is selected from compounds represented by Chemical Formulas 7 to 9 below:

[Chemical Formula 7]

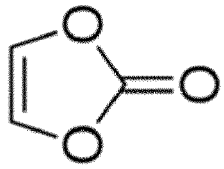

[Chemical Formula 8]

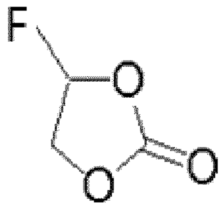

[Chemical Formula 9]

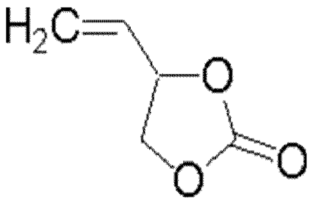
,

wherein, in Chemical Formulas 7 to 9, a solid line is a bond; carbon is located at a point where no separate element is shown and bonds meet; and the number of hydrogens satisfying a valence of the carbon is omitted.

**5.** The electrolyte solution according to claim 2, wherein the compound in which A is selected from P-F, P-Cl, P-Br, and P-I is selected from compounds represented by Chemical Formulas 10 and 11 below:

[Chemical Formula 10]

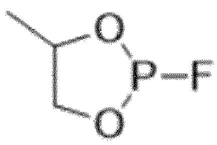

[Chemical Formula 11]

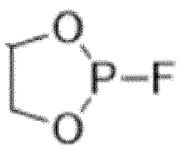

wherein, in Chemical Formulas 10 and 11, a solid line is a bond; carbon is located at a point where no separate element is shown and bonds meet; and the number of hydrogens satisfying a valence of the carbon is omitted.

**6.** The electrolyte solution according to claim 2, wherein the compound in which A is selected from O=P=O, O=S=O, and O=N=O and the compound in which A is C=O are comprised in a weight ratio of 1:0.5 to 6.0.

**7.** The electrolyte solution according to claim 2, wherein the compound in which A is selected from P-F, P-Cl, P-Br, and P-I and the compound in which A is C=O are comprised in a weight ratio of 1:0.5 to 6.0.

**8.** The electrolyte solution according to claim 1, wherein the phosphorus-based cesium salt comprises a phosphate compound substituted with 1 to 6 halogen atoms.

**9.** The electrolyte solution according to claim 6, wherein the compound in which A is selected from O=P=O, O=S=O, and O=N=O, the compound in which A is C=O, and the phosphorus-based cesium salt are comprised in a weight ratio of 1:0.5 to 6.0:0.1 to 3.

**10.** The electrolyte solution according to claim 7, wherein the compound in which A is selected from P-F, P-Cl, P-Br, and P-I, the compound in which A is C=O, and the phosphorus-based cesium salt are comprised in a weight ratio of 1:0.5 to 6.0:0.1 to 3.

**11.** The electrolyte solution according to claim 1, wherein the lithium salt comprises one or more selected from the group consisting of $LiPF_6$, $LiClO_4$, LiTFSI, $LiAsF_6$, $LiBF_4$, $LiBF_6$, $LiSbF_6$, $LiAl0_4$, $LiAlCl_4$, LiBOB, $LiB_{10}Cl_{10}$, $LiAlCl_4$, $LiAlO_4$, $LiClO_4$, $LiCF_3SO_3$, $LiCH_3CO_2$, $LiCF_3CO_2$, $LiAsF_6$, $LiSbF_6$, $LiCH_3SO_3$, LiBeTI, $LiC_4F_9SO_3$, LiN $(C_2F_5SO_3)_2$, LiN $(C_2F_5SO_2)_2$, LiN $(CF_3SO_2)_2$, LiN $(CaF_{2a+1}SO_2)(C_bF_{2b+1}SO_2)$ (a and b are natural numbers), LiCl, LiI, LiBr, and $LiB(C_2O_4)_2$.

**12.** The electrolyte solution according to claim 1, wherein the organic solvent comprises two or more selected from the group consisting of ethylene carbonate (EC), propylene carbonate (PC), butylene carbonate (BC), vinylene carbonate (VC), dimethyl carbonate (DMC), diethyl carbonate (DEC), dipropyl carbonate (DPC), ethyl methyl carbonate (EMC), methyl ethyl carbonate (MEC), fluoroethylene carbonate (FEC), methyl propyl carbonate (MPC), ethyl propyl carbonate (EPC), 1,2-butylene carbonate, 2,3-butylene carbonate, 1,2-pentylene carbonate, 2,3-butylene carbonate, methyl acetate, ethyl acetate, propyl acetate, methyl propionate, ethyl propionate, propyl propionate, butyl propionate, $\gamma$-butyrolactone, $\gamma$-valerolactone, $\gamma$-caprolactone, $\sigma$-valerolactone, and $\varepsilon$-caprolactone.

**13.** The electrolyte solution according to claim 1, wherein, based on 100 % by weight in total of the electrolyte solution, the electrolyte solution comprises one or more additives selected from the group consisting of boron compounds, phosphorus compounds, sulfur compounds, and nitrogenous compounds in an amount of 10 % by weight or less.

**14.** An electrolyte solution additive, comprising:

a phosphorus-based cesium salt; and
two or more selected from compounds represented by Chemical Formulas 1 and 2 below:

[Chemical Formula 1]

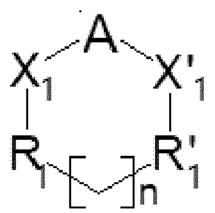

[Chemical Formula 2]

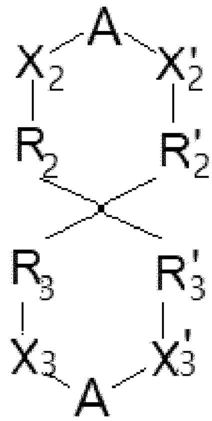

,

wherein, in Chemical Formulas 1 and 2, A is independently selected from C=O, O=P=O, O=S=O, O=N=O, P-F, P-Cl, P-Br, and P-I; $X_1$, $X_2$, $X_3$, $X_1$', $X_2$', and $X_3$' are independently a bond or oxygen; n is an integer from 0 to 3; $R_1$ and $R_1$' are independently a single bond, a double bond, or a substituted or unsubstituted alkylene having 1 to 10 carbon atoms and comprise one or more carbon atoms; and $R_2$, $R_3$, $R_2$', and $R_3$' are independently a substituted or unsubstituted alkylene having 1 to 10 carbon atoms and comprise one or more carbon atoms.

**15.** A lithium secondary battery, comprising an anode, a cathode, a separator disposed between the anode and the cathode, and an electrolyte solution,
wherein the electrolyte solution is the electrolyte solution according to claim 1.

**16.** The lithium secondary battery according to claim 15, wherein the lithium secondary battery has a discharge resistance value of 32.5 mQ or less at 60 °C.

**17.** The lithium secondary battery according to claim 15, wherein the lithium secondary battery has a recovery capacity of 770 mAh or more at 60 °C.

**18.** The lithium secondary battery according to claim 15, wherein the lithium secondary battery has a thickness increase rate of 10.5 % or less as measured at 60 °C and calculated by Equation 1 below:

[Equation 1]

Thickness increase rate (%) = {(Thickness after storage at high temperature - Initial thickness) / Initial thickness} × 100

Europäisches Patentamt
European Patent Office
Office européen des brevets

# EUROPEAN SEARCH REPORT

Application Number
EP 23 17 9013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/359196 A1 (KIM JIN SUNG [KR] ET AL) 8 December 2016 (2016-12-08)<br>* claims 1,2; example 14; table 1 *<br>* the whole document *<br>----- | 1,3,8, 11-18 | INV.<br>H01M10/052 |
| X | US 2020/212486 A1 (XU WU [US] ET AL) 2 July 2020 (2020-07-02)<br>* claims 1, 3, 8;1,3-Propane sultone; cesium hexafluorophosphate (CsPF6) *<br>* the whole document *<br>----- | 1,3,8, 11-18 | |
| X | JP 2020 013881 A (ASAHI KASEI CORP) 23 January 2020 (2020-01-23)<br>* formula 1-1;<br>claim 2 *<br>* the whole document *<br>----- | 1,3,8, 11-18 | |
| X | US 2020/044285 A1 (SU CHI CHEUNG [US] ET AL) 6 February 2020 (2020-02-06)<br>* examples; Formula II *<br>* the whole document *<br>----- | 1-18 | TECHNICAL FIELDS SEARCHED (IPC) |
| A | EP 2 913 880 A1 (GS YUASA INT LTD [JP]) 2 September 2015 (2015-09-02)<br>* Claim1 , General Formula 1; claim 4, Formula 7; table 1, example 15; compound 7 *<br>* the whole document *<br>----- | 1-18 | H01M |
| A | DE 10 2019 132988 A1 (GM GLOBAL TECH OPERATIONS LLC [US]) 9 July 2020 (2020-07-09)<br>* claim 6, formula I; 55 *<br>* the whole document *<br>----- | 1-18 | |

The present search report has been drawn up for all claims

1

| Place of search | Date of completion of the search | Examiner |
|---|---|---|
| The Hague | 5 October 2023 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 17 9013

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2023

| Patent document cited in search report | Publication date | Patent family member(s) | Publication date |
|---|---|---|---|
| US 2016359196 A1 | 08-12-2016 | CN 106252710 A | 21-12-2016 |
| | | CN 112768747 A | 07-05-2021 |
| | | KR 20160144123 A | 16-12-2016 |
| | | US 2016359196 A1 | 08-12-2016 |
| | | US 2019067741 A1 | 28-02-2019 |
| US 2020212486 A1 | 02-07-2020 | US 2020212486 A1 | 02-07-2020 |
| | | WO 2020139602 A1 | 02-07-2020 |
| JP 2020013881 A | 23-01-2020 | JP 7096724 B2 | 06-07-2022 |
| | | JP 2020013881 A | 23-01-2020 |
| US 2020044285 A1 | 06-02-2020 | NONE | |
| EP 2913880 A1 | 02-09-2015 | CN 104718658 A | 17-06-2015 |
| | | EP 2913880 A1 | 02-09-2015 |
| | | JP 6225914 B2 | 08-11-2017 |
| | | JP WO2014068805 A1 | 08-09-2016 |
| | | US 2015280282 A1 | 01-10-2015 |
| | | WO 2014068805 A1 | 08-05-2014 |
| DE 102019132988 A1 | 09-07-2020 | CN 111430802 A | 17-07-2020 |
| | | DE 102019132988 A1 | 09-07-2020 |
| | | US 2020220223 A1 | 09-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1295395 B1